# EUROPÄISCHE PATENTSCHRIFT

(11) **EP 1 373 691 B1**
(45) Veröffentlichungstag und Bekanntmachung des Hinweises auf die Patenterteilung: **04.01.2006**
(21) Anmeldenummer: 02727230.1
(22) Anmeldetag: 15.03.2002
(51) Int. Cl.: F01N 3/20, F01N 3/031

(54) **STEUERUNGSELEMENT ZUR GLEICHZEITIGEN STEUERUNG VON GASSTRÖMEN**
CONTROL ELEMENT FOR THE SIMULTANEOUS CONTROL OF GASEOUS STREAMS
ELEMENT DE COMMANDE POUR LA DISTRIBUTION SIMULTANEE DE FLUX GAZEUX

(30) Priorität: 16.03.2001 DE 10112819; 05.07.2001 DE 10132498; 11.10.2001 DE 10150170
(43) Veröffentlichungstag der Anmeldung: 02.01.2004
(73) Patentinhaber: ROBERT BOSCH GMBH, 70442 Stuttgart (DE)
(72) Erfinder: BRENNER, Frank, 71686 Remseck (DE); WEBER, Georg, 74336 Brackenheim-Stockheim (DE); BAREIS, Marc, 71706 Markgroeningen (DE); KHATCHIKIAN, Peter, 71701 Schwieberdingen (DE)
(74) Vertreter: Hörschler, Wolfram Johannes
(86) Internationale Anmeldenummer: PCT/DE2002/000952
(87) Internationale Veröffentlichungsnummer: WO 2002/075124

(56) Entgegenhaltungen:
- US-A- 5 406 790
- US-A- 5 735 540
- US-A- 6 029 444
- US-B1- 6 182 445
- PATENT ABSTRACTS OF JAPAN vol. 006, no. 163 (M-152), 26. August 1982 (1982-08-26) & JP 57 079209 A (NIPPON DENSO CO LTD), 18. Mai 1982 (1982-05-18)
- PATENT ABSTRACTS OF JAPAN vol. 2000, no. 03, 30. März 2000 (2000-03-30) & JP 11 343852 A (YAMAHA MOTOR CO LTD), 14. Dezember 1999 (1999-12-14)

## Beschreibung

### Technisches Gebiet

Die Anforderungen an heutige Verbrennungsmotoren, seien es fremdgezündete gemischverdichtende oder luftverdichtende Verbrennungskraftmaschinen, hinsichtlich der Abgasemissionen steigen ständig. Hinsichtlich der für 2005 zu erwartenden Euro IV-Norm wird bei luftverdichtenden Verbrennungskraftmaschinen der Einsatz von Partikelfiltern diskutiert. Diese sollen die vom Dieselmotor emittierten Partikel aus dem Abgasstrom entfernen. CO und HC lassen sich mit Oxidationskatalysatoren zum Großteil verbrennen. Schwierig gestaltet sich die Reduktion von NOₓ, das zudem auch bei fremdgezündeten Benzin-Direkteinspritz-Ottomotoren entsteht.

### Stand der Technik

JP 57 079 209 A bezieht sich auf eine Reinigungsvorrichtung für Abgas. Es handelt sich um eine Nachverbrennungseinrichtung, bei der ein Brenner die in Filterelementen angelagerten Partikel nachverbrennt. Mittels einer schwenkbaren Klappe kann die Flamme des Brenners in das eine oder das andere der Filterelemente gerettet werden. Der Brenner weist Öffnungen auf, aus denen Luftstrahlen austreten, so dass mit Hilfe der Abwärme eines vor den Filtern angeordneten Katalysators die Partikel in den Filterelementen abgebrannt werden können.

US 5,406,790 A bezieht sich auf eine Abgasreinigungsvorrichtung für einen Motor. Im Abgassystem ist ein NOₓ-Absorber angeordnet, der vor einem bestimmten Kraftstoff-/Luftverhältnis Stickoxide des Abgases aufnimmt. Zur Regenerierung des NOₓ-Absorbers wrid ein Ventil geschlossen, so dass ein Reduziermittel dem NOₓ-Absorber zugeführt werden kann, während dieser nicht von Abgas durchströmt wird. Während der Regenerationsphase des NOₓ-Absorbers wird ein Teil des Abgases als Trägergas für das Reduziermittel benutzt.

Bei luftverdichtenden Verbrennungskraftmaschinen werden die Schadstoffe CO und HC mit einem der Verbrennungskraftmaschine nachgeschalteten Oxidationskatalysator zum größten Teil verbrannt. Am schwierigsten gestaltet sich die Reduktion von NOₓ. Erst durch das Zusetzen eines Reduktionsmittels zum Abgasstrom kann in einem nachgeschalteten Katalysator die NOₓ-Senkung erzielt werden.

Das Nachschalten eines Oxidationskatalysators bewirkt beim Dieselmotor eine deutliche Senkung der Kohlenmonoxid- und Kohlenwasserstoffemission. Da die Kohlenwasserstoffemission zur Partikelemission beiträgt, kann auch diese in begrenztem Maße durch den Katalysator reduziert werden. Die Verwendung von schwefelarmem Kraftstoff (≤ 0,001 % (< 10 ppm) S ab 2005) gewährleistet eine dauerhafte Wirksamkeit des Katalysators.

Zur Zeit werden mittels des SCR-Verfahrens (Selektive Katalytische Reduktion) die höchsten NOₓ-Konvertierungsraten erzielt. Dabei wird ein Reduktionsmittel über ein Dosiersystem kennfeldabhängig in den mehrteiligen Katalysator eingedüst. Das derzeit gebräuchlichste Reduktionsmittel ist eine Harnstoff-Wasserlösung. Im Hydrolyseteil wird daraus das eigentliche Reduktionsmittel Ammoniak gebildet. Im SCR-Teil erfolgt dann die Reduktion von NOₓ. Komplettiert wird das Katalysatorsystem in der Regel durch einen Oxidationsteil, der die unverbrannten Schadstoffe CO und HC oxidiert. Anstelle von einer Harnstoff Wasserlösung als Reduktionsmittel kann auch Dieselkraftstoff als Reduktionsmittel eingesetzt werden.

Gemäß einer anderen Ausführungsvariante (CRT-System) werden zuerst in einem Oxidationskatalysator die Schadstoffe CO, HC und NOₓ oxidiert, wobei ein sich kontinuierlich regenerierendes Partikelfiltersystem eingesetzt wird. Das durch die Oxidation gebildete NO₂ verbindet sich anschließend im nachgeschalteten Rußfilter mit dem Kohlenstoff C der dort abgeschiedenen Partikel und verbrennt ihn kontinuierlich zu CO₂, Das NO₂ wird somit wieder zu NO reduziert. Eine eventuell gewünschte komplette NOₓ-Reduktion müßte anschließend auf Basis des SCR-Verfahrens - wie oben dargelegt - durchgeführt werden. Dieses System vermeidet Temperaturspitzen im Rußfilter und erhöht somit dessen Lebensdauer. Zur Sicherstellung einer optimal und dauerhaft wirksamen Reduktion ist der Motorbetrieb mit schwefelfreiem Dieselkraftstoff (≤ 0,001 % Schwefel), auch Citydiesel genannt, erforderlich.

Bei heute in der Entwicklung befindlichen Ottomotoren, die gemäß des Prinzips der Benzindirekteinspritzung arbeiten, entstehen bei der Verbrennung NOₓ-Anteile, die im sehr mageren Abgas nicht durch einen Dreiwegekatalysator reduziert werden können. Durch Abgasrückführung mit hoher Abgasrückführrate wird eine Reduzierung des NOₓ-Anteils im Abgas um etwa 70% erreicht. Zur Erfüllung der Abgasvorschriften ist zusätzlich eine Nachbehandlung der NOₓ-Emission unumgänglich. Für eine Reduzierung dieses Abgasanteils bietet der NOₓ-Speicherkatalysator das größte Potential. Als motorische Maßnahmen zur Beeinflussung der Abgaszusammensetzung hat sich hinsichtlich der NOₓ-Emission als sehr wirkungsvoll erwiesen, durch das dem Brennraum nochmals zugeführte Abgas die Absenkung der Verbrennungsspitzentemperatur zu erzielen. Da die NOₓ-Bildung überproportional mit der Verbrennungstemperatur steigt, stellt die Abgasrückführung als temperatursenkende Maßnahme eine sehr wirkungsvolle Methode zur NOₓ-Senkung dar. Durch weitergehende Optimierung der Abgasrückführraten kann auch eine Reduzierung des Kraftstoffverbrauchs erzielt werden. Die Abgasrückführung kann erreicht werden über innere Abgasrückführung durch entsprechende Ventilüberschneidung oder durch äußere Abgasrückführung durch entsprechend gesteuerte Abgasrückführventile.

### Darstellung der Erfindung

Mit der erfindungsgemäßen Lösung läßt sich ein an einer Verzweigungsstelle eintretender Gasstrom in einem bestimmbaren Volumenstromverhältnis V_{Gas} in zwei Teilströme aufteilen und gleichzeitig ein zuzudosierender Strom eines weiteren Mediums, z.B. zur Abgasnachbehandlung von Abgasen einer luftverdichtenden Verbrennungskraftmaschine oder einer gemischverdichtenden, fremdgezündeten Verbrennungskraftmaschine, in einem anderen Verhältnis V_{DOS} auf die beiden erwähnten Teilströme aufteilen. Das an einer Verzweigungsstelle des eintretenden Gasstroms angeordnete Steuerelement weist einen Kanal auf, durch den das zu zudosierende Medium geleitet wird. Mit dieser Lösung kann in einer zweiflutigen Anlage auf ein zweites Dosiersystem verzichtet werden.

Anordnungen zur Abgasbehandlungen, wie sie an Verbrennungskraftmaschinen eingesetzt werden, die mit Speicherkatalysatoren versehen sind, erfordern in bestimmten, von mehreren Parametern abhängigen Zeitintervallen eine Regenerierung der Speicherkatalysatoren. Bei einer Anordnung zur Abgasbehandlung obliegt einem Speicherkatalysator die Katalyse des Hauptstroms des Abgases, während der andere nur von einem Teilstrom des Abgases beaufschlagte Katalysator von einem Medium, wie zum Beispiel einem Reduktionsmittel, zu 100% durchströmt wird. In vorteilhafter Weise kann der Teilstrom des Abgases, der dem zu regenerierenden der Speicherkatalysatoren zugeführt wird, als Trägermedium für das eingesetzte Reduktionsmittel dienen. Wird die Einleitungsstelle des zuzudosierenden weiteren Medienstromes, z.B. des Reduktionsmittels, so gewählt, daß die Einleitungsstelle in der Nähe der Verzweigungsstelle, d.h. in der Nähe des Steuerelementes des aufzuteilenden eintretenden Gasstroms liegt, kann der Eintrag von dem zuzudosierenden weiteren Medium wie zum Beispiel einem Reduktionsmittel in den Hauptstrom des abströmenden gasförmigen Mediums wie zum Beispiel Abgas verhindert werden.

Neben einem zweiflügelig ausgebildeten Steuerelement mit Durchtrittsöffnungen für einen Teilstrom des eintretenden Gasstroms, d.h. zur Bereitstellung eines Trägermediums für das zuzudosierenden weitere Medium, wie zum Beispiel eines Reduktionsmittels, kann das Steuerelement auch als eine an einem kreisförmig oder rechteckförmig beschaffenen Strömungskanal einseitig angelenkte Klappe ausgebildet sein. Die Schließfläche eines derart beschaffenen Steuerungselementes kann mit Rohrstücken versehen werden, die einen Durchtritt des geringeren Teilstroms des austretenden Gasstroms ermöglichen; bei dieser Ausführungsvariante des der Erfindung zugrundeliegenden Gedankens kann die Einspeisestelle für das zuzudosierende Medium unmittelbar vor dem einseitig angelenkten Steuerelement angeordnet werden. Ferner kann bei dieser Ausführungsvariante das zuzuführende Medium oberhalb der Bodenfläche oder unterhalb der Deckelfläche des Strömungskanals etwa mittig in diesen eingebracht werden, so daß keine Reibungsverluste an der Wandung des Strömungskanals auftreten können.

Mit dem erfindungsgemäß beschaffenen Steuerelement lassen sich ein eintretender Gasstrom in zwei austrittsseitige Teilströme entsprechend der Stellung des Steuerelementes im Strömungskanal einstellen; andererseits ist durch die Anordnung von fensterartig konfigurierten Durchbrüchen in den Flächen des Steuerelementes oder dem Vorsehen von Rohrabschnitten in derselben der Durchtritt eines zuzudosierenden Mediums durch die Fläche des Steuerelementes bei Einspeisung des zuzudosierenden Mediums wie zum Beispiel eines Reduktionsmittels zur Regeneration von Speicherkatalysatoren vor und nach dem Steuerelement gewährleistet. Das erfindungsgemäß vorgeschlagene Steuerungselement zur gleichzeitigen Steuerung von Gasströmen lässt sich besonders vorteilhaft in Abgasbehandlungssystemen verwenden, wenn in den Abzweigen jeweils ein Partikelfilter mit einem Vorgeschalteten Oxidationskatalysator angeordnet ist. Diese auch als "katalytischer Brenner" bezeichnete Anordnung dient der Aufheizung des Abgases zur Regenerierung des beladenen Partikelfilters durch Rußabbrand. Es hat sich als besonders vorteilhaft erwiesen, eine Regenerierung im Teilstrom durchzuführen. Gemäß einer anderen Anwendungsmöglichkeit der erfindungsgemäß vorgeschlagenen Einrichtung kann auch eine Einsatzvariante darin bestehen, in beiden Zweigen eines zweiflutig ausgebildeten Abgasnachbehandlungssystemes falls eine NO_{Speicher} und einen Partikelfilter anzuordnen.

### Zeichnung

Anhand der Zeichnung wird die Erfindung nachstehend näher erläutert.

Es zeigt:
- Figur 1: die Gesamtanordnung zur Behandlung eines strömenden Mediums wie zum Beispiel eines Gasstromes,
- Figur 2.1: die Vorderansicht eines an einer Verzweigungsstelle aufgenommenen schwenkbaren Steuerelementes, das zur angemeldeten Erfindung nicht gehört,
- Figur 2.2: einen Querschnitt durch die Anordnung gemäß Figur 2. 1, die zur angemeldeten Erfindung nicht gehört,
- Figur 3: eine Ansicht der Verzweigungsstelle, die zur angemeldeten Erfindung nicht gehört, in perspektivischer Ansicht,
- Figur 4.1: eine Ausführungsvariante einer Verzweigungsstelle mit in eine schwenkbare Fläche integriertem Trichterelement,
- Figur 4.2: einen Querschnitt durch die Ausführungsvariante gemäß der Darstellung in Figur 4.1 und
- Figur 5: die Ausführungsvariante gemäß Figur 4.1 in perspektivischer Draufsicht,
- Figur 6.1: eine weitere Ausführungsvariante einer Verzweigungsstelle mit in eine Hohlwelle integrierter Dosiereinrichtung,
- Figur 6.2: einen Querschnitt durch die Anordnung gemäß Figur 6.1 und
- Figur 6.3: eine schematische Draufsicht auf eine Anordnung gemäß der Darstellung in Figur 6.1,
- Figur 7: eine Wiedergabe von Schaltungsvarianten zur Ansteuerung des Steuerelementes mit bzw. ohne Drehrichtungsumkehr,
- Figur 8: die Draufsicht auf eine Ausführungsvariante mit einem an einer Trennwand verdrehbar aufgenommenen Steuerungselement,
- Figur 9: eine Vorderansicht der Variante des Steuerungselements gemäß der Darstellung in Figur 8,
- Figur 10: eine Rückansicht der Ausführungsvariante gemäß Figur 8,
- Figur 11: einen Teilschnitt durch das Steuerungselement gemäß Figuren 9 und 10 und
- Figur 12.1: Darstellung vonEinzelheiten der Dosiermittelzuführung
- Figur 12.2: Darstelllung von Einzelheiten der Dosiermittelzuführung

### Ausführungsvarianten

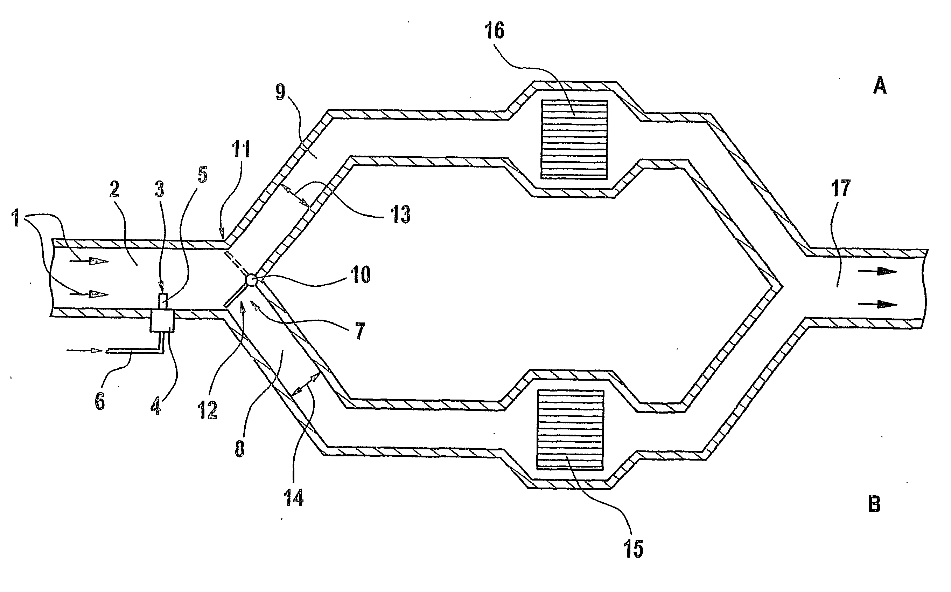

Der Darstellung gemäß Figur 1 ist die Gesamtanordnung zur Behandlung eines strömenden Mediums, wie zum Beispiel eines Gasstromes zu entnehmen.

Die erfindungsgemäß vorgeschlagene Einrichtung zur Aufteilung eines zu behandelnden Gasstromes wird nachfolgend anhand eines als Beispiel herangezogenen Abgasbehandlungssystems, wie es an Verbrennungskraftmaschinen eingesetzt wird, näher beschrieben.

Mit Bezugszeichen 1 ist ein eintretender Gasstrom, zum Beispiel ein zu behandelnder Abgasstrom einer gemischverdichtenden, fremdgezündeten Verbrennungskraftmaschine oder einer luftverdichtenden Verbrennungskraftmaschine, d.h. eines Dieselmotors gekennzeichnet. Der eintretende Gasstrom durchströmt den freien Strömungsquerschnitt 2 eines Leitungssystems. In einer Wandung des Leitungssystems, sei es seitlich oder unten im Bodenbereich oder im Deckelbereich des freien Strömungsquerschnittes 2, ist eine Einspeisestelle 3 für ein dem zu behandelnden Gasstrom zuzudosierendes Medium vorgesehen. In der Darstellung gemäß Figur 1 ist die Einspeisestelle 3 fingerförmig ausgebildet, an der über eine Öffnung aus einer Dosiereinrichtung ein zuzudosierendes Medium in den freien Strömungsquerschnitt eingetragen wird. Die Dosiervorrichtung 4, hier lediglich schematisch dargestellt, geht über eine Zuleitung 6 mit einem Reservoir in Verbindung, in dem das zuzudosierende Medium in größerem Vorrat aufgenommen ist.

An einer Verzweigungsstelle, in der sich der freie Strömungsquerschnitt 2 in einen Abzweig A, durch Bezugszeichen 8 gekennzeichnet und einen Abzweig B, durch Bezugszeichen 9 gekennzeichnet aufteilt, ist an einer Achse 10 ein Steuerelement 7 aufgenommen. Das Steuerelement 7 - in der Darstellung gemäß Figur 1 der Einfachheit halber lediglich als Klappe dargestellt - kann zwischen einer Stellposition A, 11, und einer Stellposition B, 12, hin- und hergeschwenkt werden. Die Stellbewegung des Steuerelementes 7 um seine Achse 10 erfolgt durch einen Stellantrieb, der hier nicht näher dargestellt ist.

Nach Passage des zwischen den Stellpositionen A und B verstellbaren Steuerelementes 7 tritt ein Teilstrom des eintretenden Gasstromes 1 in den Abzweig B, Bezugszeichen 8, ein und durchströmt dessen Strömungsquerschnitt 14 in Richtung auf einen in der Anordnung zur Abgasbehandlung aufgenommenen Speicherkatalysator 15.

Der Hauptstrom des eintretenden zu behandelnden Gasstromes 1 passiert gemäß der Darstellung in Figur 1 den Abzweig A, gekennzeichnet durch Bezugszeichen 9 und durchströmt dessen freien Strömungsquerschnitt 13 in Richtung eines im Abzweig 9 aufgenommenen weiteren Speicherkatalysators 15. An einer Zusammenführung 17 treffen die jeweiligen, den Abzweig A -Bezugszeichen 8- und den Abzweig B -Bezugszeichen 9- passierenden Teilströme wieder zusammen und verlassen die Anordnung zur Abgasbehandlung, eventuell über einen hier nicht näher dargestellten Endschalldämpfer eines Kraftfahrzeuges.

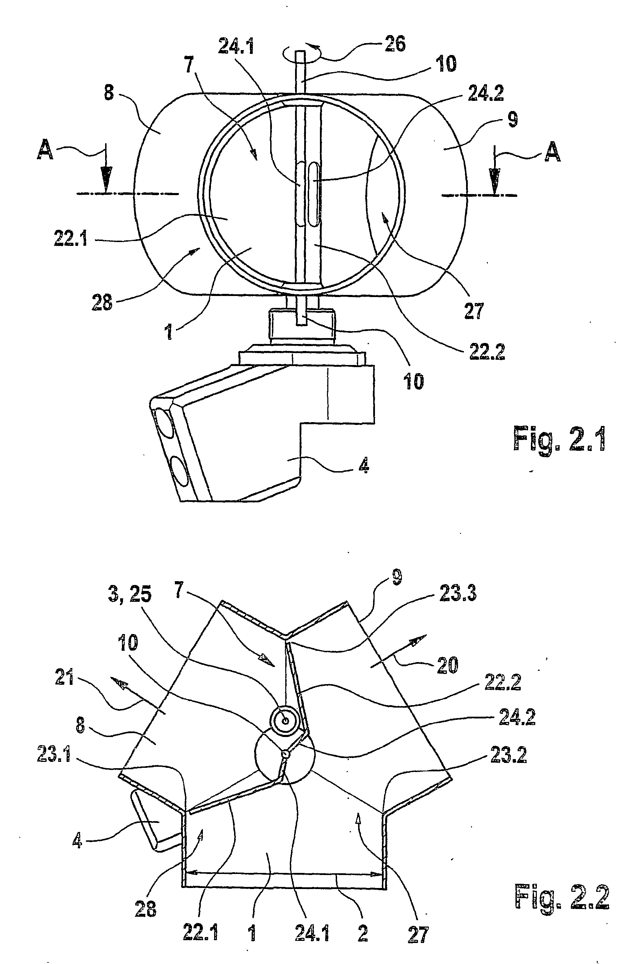

Aus der Darstellung gemäß Figur 2.1 geht die Vorderansicht eines an einer Verzweigungsstelle aufgenommenen verstellbaren Steuerelementes näher hervor, das zur angemeldeten Erfindung nicht gehört.

Gemäß der Darstellung in Figur 2.1 durchströmt der eintretende Gasstrom 1 den freien Strömungsquerschnitt 2 eines hier kreisförmig konfigurierten Strömungskanals. Das an der Verzweigungsstelle aufgenommene, um die Achse 10 bewegbare Steuerelement 7 ist in der Ausführungsvariante gemäß Figur 2.1 mit zwei symmetrisch zur Achse 10 aufgenommenen Flächenabschnitten 22.1 bzw. 22.2 versehen. Entsprechend der Stellbewegung 26 des Steuerelementes 7 für den eintretenden, zu behandelnden Gasstrom 1 kann das Volumenstromverhältnis V_{Gas}, mit welchem der eintretende Gasstrom auf die Abzweige 8 bzw. 9 aufgeteilt wird, bestimmt werden. Das Steuerungselement 7 ist um die Achse 10 in beide Richtungen verstellbar, wobei die Stellbewegung über einen hier nicht näher dargestellten Antrieb in die hier senkrecht verlaufende Achse 10 eingeleitet wird. Gemäß der Darstellung in Figur 2.1 ist der erste Flächenabschnitt 22.1 des Steuerelementes 7 in seine zweite Stellung 28 gedreht, während der in der Darstellung gemäß Figur 2.1 nur teilweise sichtbare zweite Flächenabschnitt 22.2 des Steuerelementes 7 den Strömungsquerschnitt des Abzweiges 9 freigibt, d.h. in seine erste Stellung 27 gedreht ist. Gemäß der Stellung des ersten Flächenabschnittes 22.1 und des zweiten Flächenabschnittes 22.2 des um seine Achse 10 verstellbaren Steuerelementes 7 durchströmt der Hauptstrom des eintretenden, zu behandelnden Gasstromes an der in Figur 2.1 dargestellten Verzweigungsstelle in den Abzweig 9.

Aus der Darstellung gemäß Figur 2.2, die zur angemeldeten Erfindung nicht gehört, geht ein Querschnitt durch die Anordnung gemäß der Darstellung in Figur 2.1 näher hervor.

Der erste Flügelabschnitt 22.1 des um seine Achse 10 verstellbaren Steuerelementes 7 steht an einer Anlagekante 23.1 der Begrenzung des Strömungskanals an. In der in Figur 2.2 dargestellten Position steht der zweite Flügelabschnitt 22.2 des um seine Achse 10 verstellbaren Steuerelementes 7 an einer weiteren Anlagekante 23.3 der den Strömungskanal begrenzenden Wandung an.

Durch den flügelförmig konfigurierten ersten Flächenabschnitt 22.1 und den flügelförmig konfigurierten zweiten Flächenabschnitt 22.2 des Steuerelementes 7 ist das Eintreten eines größeren Teilstromes des über den Strömungsquerschnitt 2 eintretenden Gasstromes 1 in den Abzweig 8 nicht möglich. Der in den Abzweig 8 eintretende Teilstrom wird durch die Größe von fensterartig konfigurierten Öffnungen 24.1 bzw. 24.2 im ersten Flächenabschnitt 22.1 bzw. im zweiten Flächenabschnitt 22.2 bestimmt. Durch diese vermag ein Teilstrom von etwa 10% des eintretenden, zu behandelnden Gasstromes 1 in den Abzweig 8 eintreten. Beim Durchströmen der fensterartig konfigurierten Öffnungen 24.1 bzw. 24.2 des Steuerelementes 7 reißt der Teilstrom 21 das zuzudosierende Medium 5 aus der Einspeisestelle 3 bzw. 25 mit und verhindert dessen Eintrag in den den freien Strömungsquerschnitt zwischen der Achse 10 und einer Anlagekante 23.2 passierenden, austretenden Hauptstrom 20 des eintretenden, zu behandelnden Gasstromes 1.

Gemäß der in Figur 2.2 dargestellten Stellung des Steuerelementes 7 würde in Zusammenschau mit der Anordnung zur Behandlung von Abgas gemäß der Darstellung in Figur 1 der austretende Teilstrom 21 als Trägermedium für das hinter dem Steuerelement 7 zuzudosierende Medium 5 dienen, welches an der Einspeisestelle 3 bzw. 25 im Boden des Strömungskanals in diesen eintritt und durch das über die Öffnungen 24.1 bzw. 24.2 eintretende Gas mitgerissen wird. Der im Abzweig 8 gemäß der Darstellung in Figur 1 liegende Speicherkatalysator 15 würde durch das zuzudosierende Medium 5 regeneriert. Bei dem zuzudosierenden Medium 5 kann es sich um ein Reduktionsmittel wie zum Beispiel Harnstoff-Wasserlösung handeln. Im Hydrolyseteil des Speicherkatalysators 15 würde durch das zuzudosierende Medium 5 regeneriert. Bei dem zuzudosierenden Medium 5 handelt es sich bevorzugt um verdampfte oder zerstäubte Kohlenwasserstoffe wie etwa Dieselkraftstoff oder Benzin.

Ferner kann es sich bei dem zuzudosierenden Medium auch um ein Reduktionsmittel wie z. B. eine Harnstoff-Wasserstofflösung handeln.

Der austretende Hauptstrom 20 des eintretenden, zu behandelnden Gasstromes 1 passiert hingegen den Abzweig 9 und durchströmt den gemäß der Darstellung in Figur 1 im Abzweig 9 aufgenommenen weiteren Speicherkatalysator 16 mit Abgas, welches beispielsweise mit NOₓ beladen ist. In dieser Stellung des Steuerelementes 7 würde der gemäß der Darstellung in Figur 1 im Abzweig 8 aufgenommene Speicherkatalysator 15 regeneriert, was durch das zuzudosierende Medium 5 wie z. B. Kraftstoffdampf oder ein Kraftstoffspray als Reduktionsmittel erfolgt, während der im Abzweig 9 aufgenommene Speicherkatalysator 16 den austretenden Hauptstrom 20 des eintretenden, zu behandelnden Gasstrom 1 reinigt.

Die beiden Teilströme 20 bzw. 21 werden gemäß der Darstellung in Figur 1 an einer Zusammenführung 17 zusammengeführt, bevor sie gemeinsam einem Endschalldämpfer einer Abgasanlage einer Verbrennungskraftmaschine zugeführt werden können oder ins Freie gelangen.

Gemäß der Darstellung in Figur 2.2 ist die Dosiereinrichtung 4, über welche die Einspeisestelle 3 bzw. 25 mit dem zuzudosierenden Medium 5 versorgt wird, unterhalb des Bodens des Strömungsquerschnitts 2 aufgenommen. Der Abzweig 9, der in der Darstellung gemäß Figur 2.2 vom austretenden Hauptstrom 20 des eintretenden, zu behandelnden Gasstroms 1 durchströmt wird, vermag diesen dank der ersten Stellung 27 des Steuerelementes 7 zu ca. 90% passieren, während der verbleibende austretende Teilstrom 21 zu etwa 10% die fensterartig konfigurierten Öffnungen 24.1 bzw. 24.2 in den flügelförmig konfigurierten Flächenabschnitten 22.1 bzw. 22.2 des Steuerelementes 7 passiert.

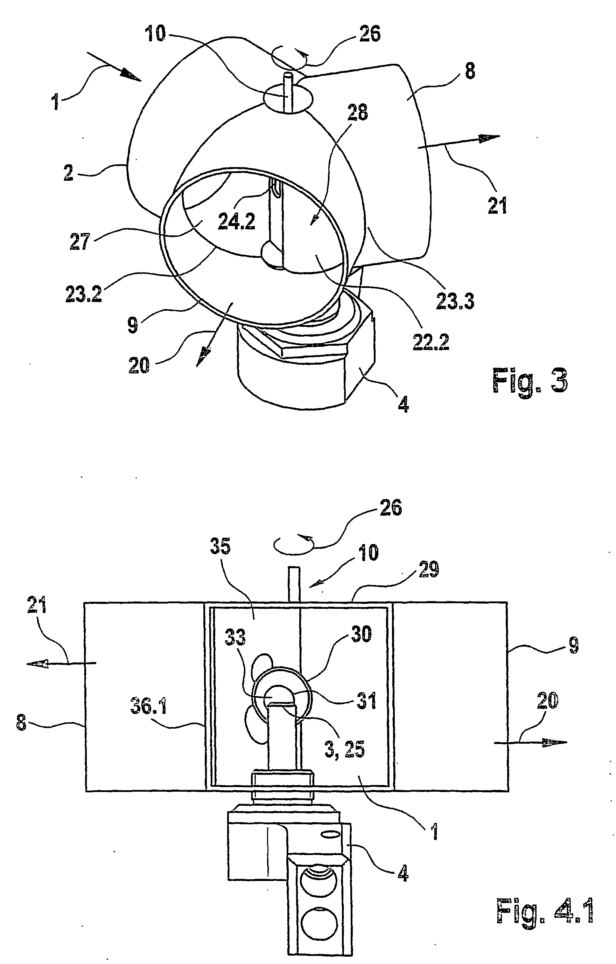

Figur 3 zeigt eine Ansicht der Verzweigungsstelle, die zur angemeldeten Erfindung nicht gehört, in perspektivischer Ansicht.

Aus dieser Darstellung geht hervor, daß die Dosiereinrichtung 4, über welche das zuzudosierende Medium 5 in den Strömungskanal eingetragen wird, unterhalb der Verzweigungsstelle gemäß Figur 3 angeordnet ist. In dieser Ansicht ist die die Wandung des Strömungskanals durchsetzende Achse 10 erkennbar, welcher durch einen hier nicht näher dargestellten Stellantrieb eine Stellbewegung 26 aufgeprägt werden kann. Durch die erste Stellung 27 des Steuerelementes 7 wird der eintretende, zu behandelnde Gasstrom 1, der den Strömungsquerschnitt 2 passiert so aufgeteilt, daß der austretende Hauptgasstrom 20 in den Abzweig 9 mit einem Volumenstromanteil von 90% eintritt, während der verbleibende, durch die Öffnungen 24.1 bzw. 24.2 in den Abzweig 8 austretende Teilstrom 21 etwa 10% des eintretenden, zu behandelnden Gasstroms 1 ausmacht. Das Volumenstromverhältnis V_{Gas} der Teilströme 20, 21 in bezug aufeinander kann durch die Achse 10 in bezug auf die Anlagekanten 23.2 bzw. 23.3 variiert werden, wobei jedoch stets sichergestellt ist, daß das zuzudosierende Medium 50 stets dem Abzweig 8 oder 9 zugeführt wird, in dem der zu regenerierende Speicherkatalysator 15 bzw. 16 aufgenommen ist.

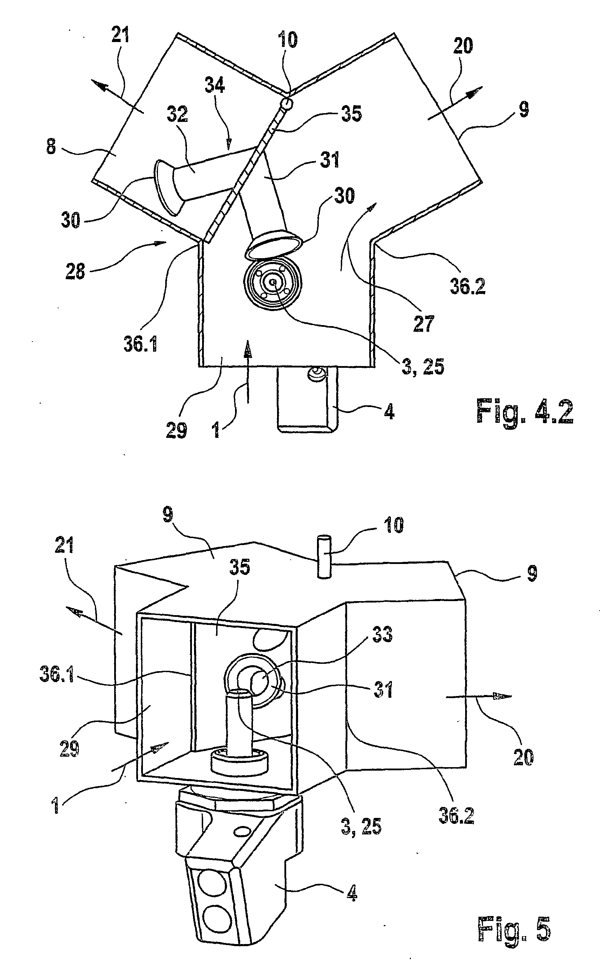

Aus der Darstellung gemäß Figur 4.1 geht eine Ausführungsvariante einer Verzweigungsstelle mit in eine schwenkbare Fläche integrierten Rohrabschnitten näher hervor.

Analog zu den Darstellungen gemäß der Figuren 2.1, 2.2 und Figur 3 ist an einem rechteckförmig ausgebildeten Strömungskanal eine Dosiereinrichtung unterhalb des Strömungskanals aufgenommen. Über die Dosiereinrichtung 4 wird das zuzudosierende Medium 5 einer fingerförmig konfigurierten Einspeisestelle 3 bzw. 25 zugeführt.

Der eintretende, zu behandelnde Gasstrom 1 tritt in den rechteckförmigen Querschnitt 29 des Strömungskanals ein und passiert die fingerförmig konfigurierte Einspeisestelle 3 bzw. 25 für das zuzudosierende Medium 5. Gemäß der Darstellung in Figur 4.1 befindet sich hinter der fingerförmig in den rechteckförmig ausgebildeten Strömungsquerschnitt 29 hineinragenden Einspeisestelle 3 bzw. 25 für das zuzudosierende Medium, ein Trichterelement 30, welches an einem an einer Klappenfläche 35 befestigten Rohrabschnitt 31 ausgebildet ist. Der Rohrabschnitt 31 gibt einen Strömungsquerschnitt 33 frei, durch welchen ein Teilstrom 21 des in den rechteckförmigen Querschnitt 29 eintretenden, zu behandelnden Gasstroms 1 eintritt und in den Abzweig 8 abströmt. In der Darstellung gemäß Figur 4.1 ist der Abzweig 8 im wesentlichen durch die in die zweite Stellung 28 bewegte Kante 36.1 der Klappenfläche 35 des Steuerelementes 7 verschlossen. Lediglich durch den freien Strömungsquerschnitt 33 des Rohrabschnittes 31 vermag ein Teilstrom 21 in den Abzweig 8 einzuströmen.

Demgegenüber ist der Abzweig 9 durch die Klappenfläche 35 des Steuerelementes 7 freigegeben, so daß der austretende Hauptgasstrom, etwa 90% des eintretenden, zu behandelnden Gasstroms 1, den Abzweig 9 passieren kann.

Aus der Darstellung gemäß Figur 4.2 geht ein Querschnitt durch die Ausführungsvariante gemäß der Darstellung in Figur 4.1 näher hervor.

In der Darstellung gemäß Figur 4.2 ist das als einseitig angelenkte Klappenfläche 35 ausgebildete Steuerelement 7 im Querschnitt wiedergegeben und liegt an einer Anlagekante 36.1 des im rechteckförmigen Strömungsquerschnitt 29 ausgebildeten Strömungskanals in ihrer zweiten Stellung 28 an.

An beiden Seiten der einseitig angelenkten Klappenfläche 35 sind gemäß der Ausführungsvariante in Figur 4.1 bzw. 4.2 Rohrabschnitte 31 bzw. 32 befestigt. Die Rohrabschnitte weisen an ihren der Klappenfläche 35 jeweils abgewandten Enden trichterförmig konfigurierte Einlaufelemente 30 auf. Aus der Darstellung gemäß Figur 4.2 geht hervor, daß die Rohrabschnitte 31 bzw. 32 an der Klappenfläche 35 in Winkelanordnung 34 in bezug zueinander aufgenommen sind. Aus der geschnitten dargestellten Draufsicht gemäß Figur 4.2 geht hervor, daß sich die Einspeisestelle 3 bzw. 25 des zuzudosierenden Mediums 5 unmittelbar vor dem Einlauftrichter 30 des Rohrabschnittes 31 befindet.

Würde das der Achse 10 gegenüberliegende Ende der Klappenfläche 35 von der in Figur 4.2 dargestellten Position an die Anlagekante 36.2 hinübergeschwenkt, läge die Einspeisestelle 3, 25 für das zuzudosierende Medium vor dem trichterförmig konfigurierten Einlaufbereich 30 des Rohrabschnittes 32, der gemäß der Darstellung in Figur 4.2 in den abströmseitig positionierten Abzweig 8 ragt, der vom Teilstrom 21, der etwa 10% des Volumenstromes des eintretenden, zu behandelnden Gasstroms 1 ausmacht, durchströmt wird.

Gemäß der Darstellung in Figur 4.2 ist sichergestellt, daß das zuzudosierende Medium 5 zu weitestgehend 100% den Rohrabschnitt 31 passiert und von diesem in den Abzweig 8 eintritt, wobei der etwa 10% ausmachende Volumenstrom, d.h. der austretende Teilstrom 21 als Trägermedium für das in einen zu regenerierenden Speicherkatalysator 15 einzutragende Reduktionsmittel, wie beispielsweise Dieselkraftstoff oder Benzin, dient.

Gleichzeitig ist sichergestellt, daß ein 90% des eintretenden, zu behandelnden Gasstroms 1 ausmachender austretender Hauptstrom 20 den Abzweig 9 gemäß der Darstellung in Figur 1 aufgenommenen Speicherkatalysator 16 passiert, der mit NOₓ beladen wird, während der im Abzweig 8 aufgenommene Speicherkatalysator 15 eine Regenerationsphase durchläuft.

Zur Vermeidung von Strömungsverlusten sind die Rohrabschnitte 31 bzw. 32 an den beiden Seiten der verstellbaren Klappenfläche 35 versetzt zueinander aufgenommen, so daß der die Rohrabschnitte 31 bzw. 32 in die Abzweige 8 oder 9 zu dosierende Strom aus austretendem Teilstrom 21 und zuzudosierendem Medium 5 in die Abzweige 8 bzw. 9 durch der Klappenfläche 35 eintritt.

Aus der Darstellung gemäß Figur 5 geht eine Ausführungsvariante der Verzweigungsstelle gemäß den Figuren 4.1 bzw. 4.2 in perspektivischer Draufsicht hervor.

Die unterhalb des hier in rechteckförmigem Querschnitt 29 ausgeführten Strömungskanals 1 aufgenommene Dosiereinrichtung 4 umfaßt einen Sockel 37, an welchem eine fingerförmig konfigurierte Einspeisestelle 3 bzw. 25 aufgenommen ist. Diese ist im freien Strömungsquerschnitt 29 des vom eintretenden, zu behandelnden Gasstrom 1 passierten Strömungskanal unmittelbar vor dem Trichterelement 30 des Rohrabschnitts 31 positioniert, durch dessen freien Strömungsquerschnitt 33 ein austretender Teilstrom 21 in den Abzweig 8 eintritt. Der Strömungsquerschnitt des Abzweiges 8 ist durch die an die Anlagekante 36.1 geschwenkte Klappenfläche 35 des Steuerungselementes 7 im wesentlichen verschlossen, während der Abzweig 9 vom austretenden Hauptstrom 20 (zu ca. 90%) des eintretenden, zu behandelnden Gasstroms 1 durchströmt wird.

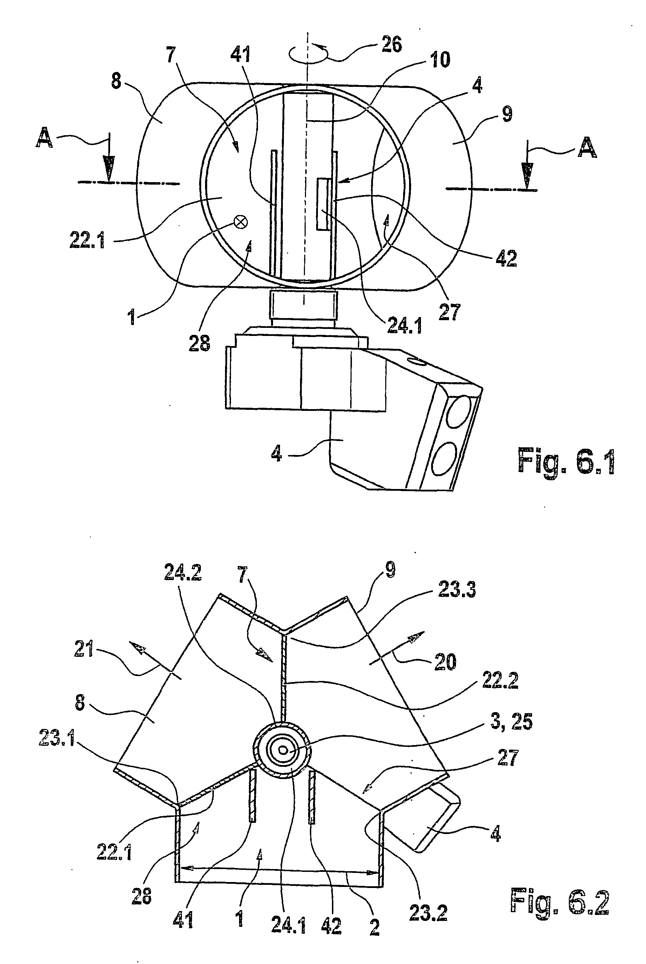

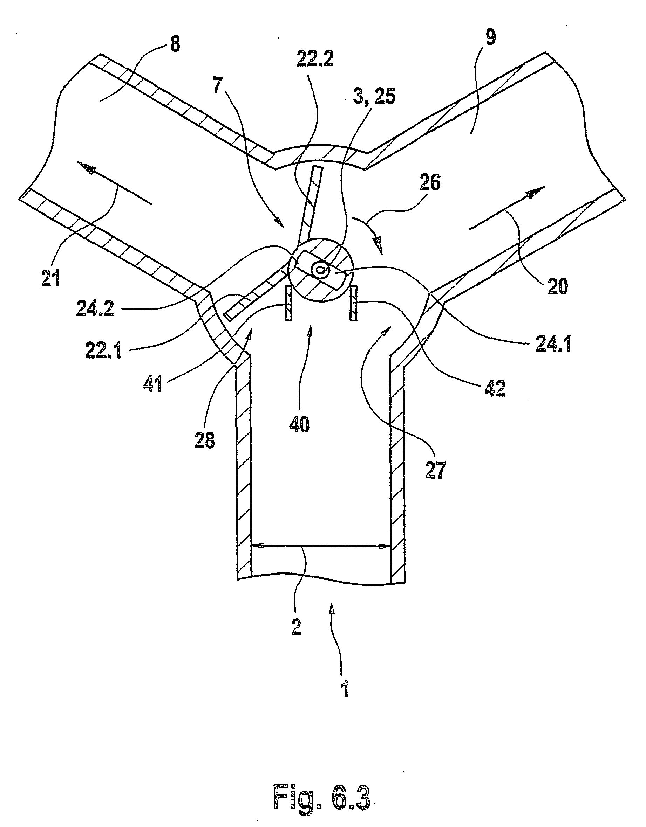

Aus den Figuren 6.1, 6.2 und 6.3 geht eine weitere Ausführungsvariante des erfindungsgemäß vorgeschlagenen Steuerungselementes zur gleichzeitigen Steuerung von Gasströmen hervor.

Figur 6.1 zeigt die Vorderansicht einer erfindungsgemäßen Ausführungsvariante mit einem an einer Hohlwelle ausgebildeten Steuerungselement 7. Gemäß dieser Ausführungsvariante ist das den eintretenden Gasstrom 1 aufteilende Steuerungselement 7 zweiflügelig ausgebildet und umfasst einen ersten Flächenabschnitt 22.1 und einen in Figur 6 nicht dargestellten weiteren, zweiten Flächenabschnitt 22.2. Die Flächenabschnitte 22.1 bzw. 22.2 sind seitlich an einer eine Achse 10 bildenden Hohlwelle 40 aufgenommen. Die Hohlwelle 40 ist zur Ausführung einer Stellbewegung 26 um die Achse 10 über eine Ansteuereinheit betätigbar. Gemäß der Darstellung in Figur 6.1 befindet sich der erste Flächenabschnitt 22.1 des Steuerungselementes 7 in einer zweite Stellung 28, während der in Figur 6.1 nicht dargestellte weitere, zweite Flächenabschnitt 22.2 in einer ersten Stellung 27 geschwenkt ist, so dass das über einen Abzweig 9 ein austretender Hauptstrom abfließen kann. Die Wandung der Hohlwelle 40 ist mit zwei fensterförmigen Öffnungen 24.1 bzw. 24.2 versehen, so dass in den Abzweig 8 in der zweiten Stellung 28 des ersten Flächenabschnittes 22.1 Steuerungselemente 7 über die fensterförmigen Öffnungen 24.1, 24.2 (nicht dargestellt) der Hohlwelle 40 ein austretender Teilstrom 21 in den Abzweig 8 eintreten kann. Die Einspeisestelle 3 bzw. 25 des zuzudosierenden Mediums 5 ist im Inneren der Hohlwelle 40 aufgenommen. Dem eintretenden Gasstrom 1 zuweisend, können der Hohlwelle 40 ein erstes Leitblech 41 sowie ein weiteres, zweites Leitblech 42 vorgeschaltet sein.

Der Darstellung gemäß Figur 6.2 ist ein Querschnitt durch die Anordnung gemäß Figur 6.1 zu entnehmen.

Die fensterförmig konfigurierten Öffnungen 24.1 bzw. 24.2 sind an der Wandung der Hohlwelle 40 einander gegenüberliegend angebracht. Im Inneren der Hohlwelle 40 ist die Einspeisestelle 3, 25 für das zuzudosierende Medium 5 ersichtlich. In zweiter Stellung 28 des ersten Flächenabschnittes 1 des Steuerelementes 7 liegt dieses an einer ersten Anlage 23.1 an, während der weitere, zweite Flächenabschnitt 22.2 des Steuerelementes 7 mit seiner Außenkante an einer weiteren Anlagefläche 23.3 an der Verzweigungsstelle anliegt. Demnach ist der Abzweig 8, der einen austretenden Teilstrom 21 des durch den Öffnungsquerschnitt 2 eintretenden Gasstromes 1 abführt, gezwungen, durch die Öffnungen 24.1 bzw. 24.2 in der Wandung der Hohlwelle 40 zu strömen und das im Inneren der Hohlwelle 40 an der Einspeisestelle 3, 25 zudosierte Medium 5 in den Abzweig 8 zu fördern.

Demgegenüber ist der Abzweig 9, durch welchen ein austretender Gasstrom 20 die Verzweigungsstelle verlässt, vollständig geöffnet, so dass ca. 90 % des eintretenden Gasstromes 1 über den Abzweig 9 abzuströmen vermögen. Der Querschnittsdarstellung gemäß Figur 6.2 sind darüber hinaus die der Hohlwelle 40 mit daran ausgebildeten ersten Flächenabschnitt 22.1 und weiterem zweiten Flächenabschnitt 22.2 vorgeordneten Leitbleche 41 bzw. 42 zu entnehmen. Diese Vergleichmäßigen die der fensterförmigen Öffnung 24.1 zuströmende eintretende Gasströmung 1.

Die Darstellung gemäß Figur 6.3 zeigt eine schematische Draufsicht auf eine Anordnung gemäß der Darstellung in Figur 6.1.

Gemäß dieser Ausführungsvariante ist eine Welle 40 mit einem den Wellenquerschnitt durchsetzenden Kanal versehen, der eine Eintrittsöffnung 24.1 bzw. eine austrittsseitige Öffnung 24.2 umfasst. In den Kanal mündet die Einspeisestelle 3 bzw. 25 für das zuzudosierende Medium 5. Mittels einer nicht dargestellten unterhalb der Zeichenebene liegenden Ansteuereinheit ist der Welle 40 eine Stellbewegung 26 gemäß des eingezeichneten Pfeiles aufprägbar. Analog zur Darstellung gemäß Figur 6.2 ist in der eingezeichneten Position des Steuerelementes 7 mit leicht gewinkelt zueinander angeordneten Flächenabschnitten 22.1 bzw. 22.2 ein Paar Leitbleche 41 bzw. 42 zugeordnet, mit welchen die Zuströmung des eintretenden Gasstromes 1 auf die eintrittseitige Öffnung 24.1 des Kanals der Welle 40 vergleichmäßigt werden kann. In der in Figur 6.2 gezeigten Position des Steuerelementes 7 ist der Abzweig 8, welcher von einem austretenden Teilstrom 21 passiert wird, durch die Flächenabschnitte 22.1 bzw. 22.2 des Steuerelementes 7 verschlossen, wohingegen der Abzweig 9, durch welchen ein austretender Hauptstrom 20 des eintretenden Gasstromes 1 abströmen kann, freigegeben ist.

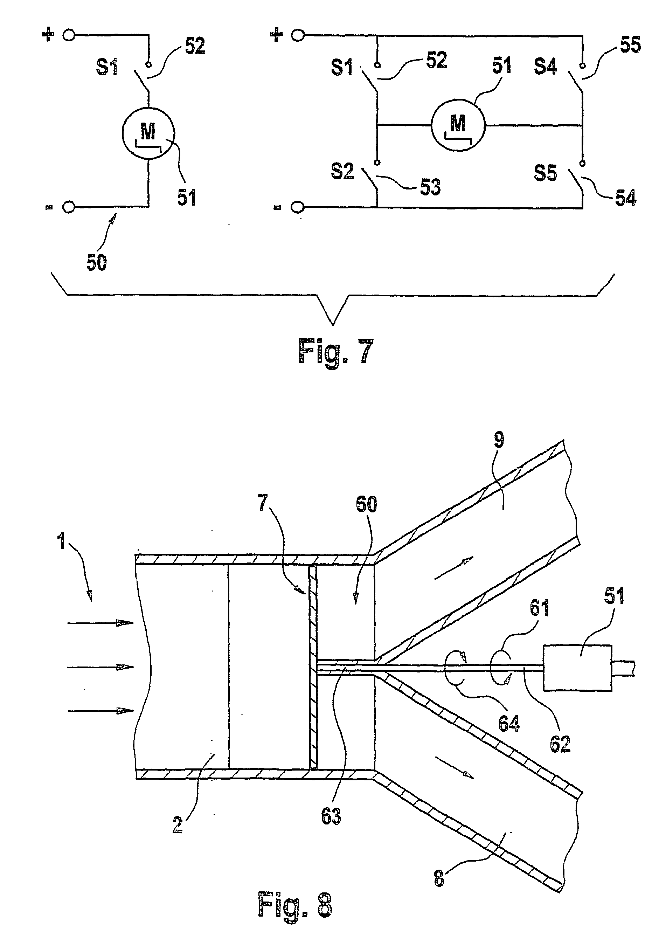

Figur 7 ist eine Wiedergabe von Schaltungsvarianten zur Ansteuerung des Steuerelements mit und ohne Drehrichtungsumkehr zu entnehmen.

Gemäß einer weiteren Ausführungsvariante des der Erfindung zugrundeliegenden Gedankens kann das Steuerungselement anstelle einer Klappenkonfiguration auch in Form eines scheibenförmigen Elements ausgebildet sein, dessen Kanten unterschiedlich große Strömungsquerschnitte zur Passage der Teilströme des eintretenden Gasstroms 1 aufweisen. Bei einer Ausführung des Steuerungselements 7 in scheibenförmiger Konfiguration, welches um eine Drehachse 63 innerhalb einer Trennwand 60 verdrehbar ist, kommt ein vorzugsweise elektrischer Antrieb 51 zum Einsatz, der in einer Schaltungsvariante 50 ohne Drehrichtungsumkehr oder in einer Schaltungsvariante 56 mit Drehrichtungsumkehr betrieben werden kann.

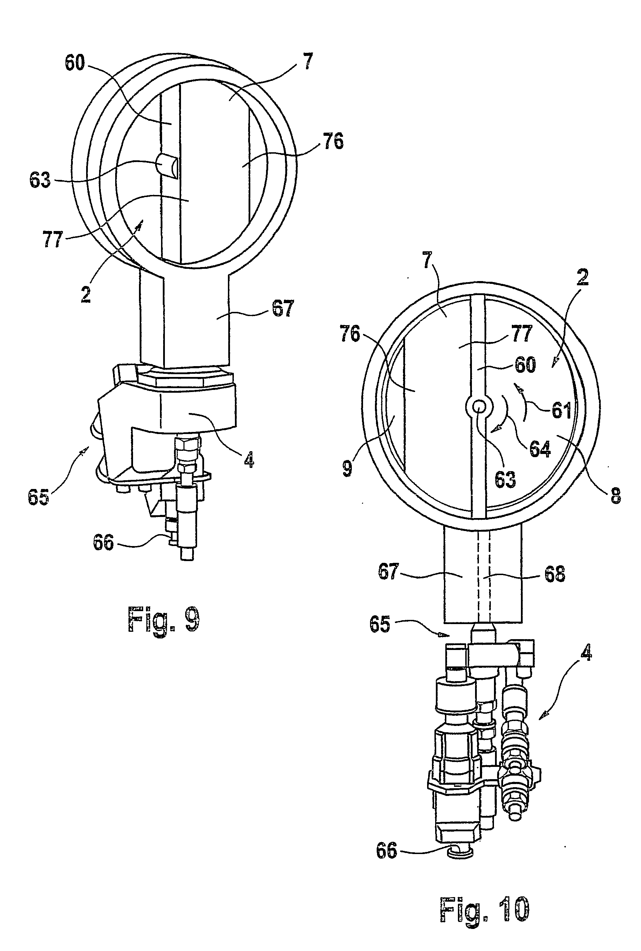

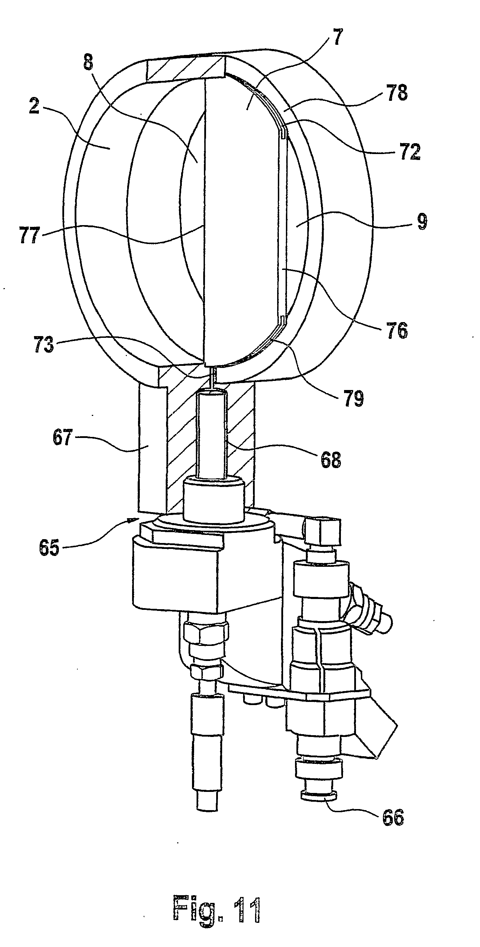

Gemäß der Schaltungsvariante ohne Drehrichtungsumkehr 50 ist der elektrische Antrieb 51 nach Betätigung des ersten Schalters 52 in eine vorgegebene Drehrichtung betätigbar. Der elektrische Antrieb 51 kann zum Beispiel als rotatorischer Wechselpol- bzw. Hybridschrittmotor ausgebildet sein, da diese elektrischen Antriebe durch ihre Bauart bedingt, die jeweils angefahrene Position des Steuerungselements 7 in unbestromtem Zustand halten. Durch die Anströmung eines beispielsweise scheibenförmig konfigurierten Steuerungselements 7, parallel zur Verstellachse, (vgl. Figuren 9 und 11) wird ein Flattern des Steuerungselements bzw. dessen ungewolltes Verstellen durch den eintretenden Gasstrom 1 vermieden.

In der Schaltungsvariante mit Drehrichtungsumkehr 56 kann der elektrische Antrieb 51 (rotatorischer Wechselpol- bzw. Hybridschrittmotor) durch vier Schalter 52, 53, 54 bzw. 55 in beide Drehrichtungen betrieben werden. Zur Darstellung des Linkslaufes des elektrischen Antriebs 51 sind der vierte Schalter 55 und der zweite Schalter 53 geschlossen, während der erste Schalter 52 sowie der dritte Schalter 54 geöffnet sind. Um einen Rechtslauf des scheibenförmig konfigurierten Steuerungselements 7 zu erreichen, sind der erste Schalter 52 bzw. der dritte Schalter 54 geschlossen, während der vierte Schalter 55 sowie der zweite Schalter 53 geöffnet sind.

Wird als Steuerungselement 7 zur Aufteilung des eintretenden Gasstroms auf die Abzweige A, Bezugszeichen 9 bzw. den Abzweig B, Bezugszeichen 8 ein klappenförmig konfiguriertes Steuerungselement 7 eingesetzt, kann mit der Schaltungsvariante mit Drehrichtungsumkehr 56 dessen Antriebseinheit 51 in beide Drehrichtungen 61 bzw. 64 betätigt werden. Wird als Steuerungselement 7 hingegen eine scheibenförmige, an einer Trennwandung 60 gelagerte Bauform eingesetzt, kann diese immer in derselben Drehrichtung um ihre Drehachse 63 verdreht werden, wozu der das Steuerungselement 7 antreibende elektrische Motor 51 in der ersten Schaltungsvariante ohne Drehrichtungsumkehr 50 gemäß der Darstellung in Figur 7 geschaltet werden kann. Bei der Schaltungsvariante ohne Drehrichtungsumkehr 50 kann die den elektrischen Antrieb 51 ansteuernde Endstufe wesentlich einfacher gehalten werden.

Figur 8 zeigt die Draufsicht auf eine Ausführungsvariante mit an einer Trennwand verdrehbar aufgenommenem Steuerungselement.

Gemäß dieser schematischen Darstellung einer weiteren Ausführungsvariante des Steuerungselements 7 ist dieses Steuerungselement scheibenförmig oder als Scheibensegment beispielsweise ausgebildet. Es wird direkt vom eintretenden Gasstrom 1, der den Strömungsquerschnitt 2 passiert, angeströmt. Da die Drehachse 63 des Steuerungselements 7 gemäß der Ausführungsvariante in Figur 8 parallel zum eintretenden Gasstrom 1 verläuft, wirken keine Kräfte auf den Verstellmechanismus, die zum Flattern oder zum ungewollten Verstellen des in Figur 8 dargestellten scheibenförmigen Steuerungselements 7 führen könnten. Durch diese Anordnung wird ferner die notwendige Verstellkraft minimiert, wodurch ein entsprechendes Stellglied sehr klein dimensioniert werden kann. Die Drehachse 63 des scheibenförmig konfigurierten Steuerungselements 7 ist in einer Trennwand 60 aufgenommen, die sich parallel zum eintretenden Gasstrom 1 im Strömungsquerschnitt 2 erstreckt. Die Betätigungswelle der Drehachse 63, d.h. die Antriebswelle 62 des elektrischen Antriebs 51, ist eine erste Drehrichtung 61 bzw. in eine zweite Verstellrichtung 64 oder in beide Richtungen je nach gewählter Ausführungsvariante des Steuerungselements 7, sei es in Scheibenform, sei es in Klappenform, vorgebbar. Als elektrischer Antrieb 51 kommen vorzugsweise rotatorische Wechselpol- bzw. Hybridschrittmotoren zum Einsatz, da diese das Steuerungselement 7 im unbestromten Zustand in der jeweils angefahrenen Position halten und gegen eine Verstellung aufgrund der Beströmungskräfte durch den eintretenden Gasstrom 1 zu halten vermögen.

Abströmseitig hinter dem Steuerungselement 7 verläuft ein Abzweig A für einen ersten Teilstrom sowie ein weiterer Abzweig B für einen zweiten Teilstrom. Entsprechend der Position des Steuerungselements 7 in Bezug auf dessen Umfangsrichtung im Strömungsquerschnitt 2 wird der eintretende Gasstrom 1 auf die jeweiligen Abzweige A bzw. B in einem unterschiedlich einstellbaren Verhältnis aufgeteilt.

Figur 9 zeigt eine Vorderansicht der Variante des Steuerungselements gemäß Figur 8.

Gemäß der Vorderansicht dieser Ausführungsvariante der erfindungsgemäßen Lösung ist der freie Strömungsquerschnitt 2 von einer Trennwand 60 durchzogen, die sich parallel zur Strömungsrichtung des eintretenden Gasstroms 1 erstreckt. In der Trennwand 60 ist eine Drehachse 63 aufgenommen, um welche ein hier in Scheibenform ausgeführtes Steuerungselement 7 verdrehbar ist. Das Steuerungselement 7 in Scheibensegmentform weist eine kurze Seite 76 sowie eine dieser gegenüberliegende lange Seite 77 auf. Durch die unterschiedlich lang verlaufenden Kantenabschnitte des in Scheibenform ausgebildeten Steuerungselements 7 werden innerhalb des Strömungsquerschnitts 2 unterschiedliche Strömungsquerschnitte für die Teilströme festgelegt. Anstelle unterschiedlich lang verlaufender Seiten 76 bzw. 77 kann das Steuerungselement 7 auch flächige Elemente mit Langlöchern in der Mitte bzw. mit Teilausbrüchen an der Außenfläche umfassen, wodurch unterschiedliche Strömungsquerschnitte für die Teilströme festlegbar sind. Der Strömungsquerschnitt 2 wird durch eine Innenwandung eines Gehäuses begrenzt, die an einem Sockel 67 aufgenommen ist. Der Sockel 67 seinerseits ist an seiner unteren Stirnfläche mit einer Dosiereinrichtung 4 versehen, die zum Beispiel einen Rohrverdampfer 65 aufnehmen kann. Die Speisung des Rohrverdampfers 65 erfolgt über einen Anschluß 66, an dem das in den freien Strömungsquerschnitt 2 einzudosierende Dosiermittel zugeführt wird.

Figur 10 zeigt eine Rückansicht der Ausführungsvariante gemäß der schematischen Darstellung in Figur 8.

In dieser Figur ist erkennbar, dass das scheibenförmig konfigurierte Steuerungselement 7 mit seiner kurzen Seite 76 einen Strömungsquerschnitt im Abzweig A für einen ersten Teilstrom begrenzt. Der Strömungsquerschnitt für den zweiten Teilstrom im Abzweig B, identifiziert durch Bezugszeichen 8, ist wesentlich größer bemessen als der Strömungsquerschnitt für den ersten Teilstrom. Durch den in Figur 8 angedeuteten, in Figur 10 jedoch nicht dargestellten, elektrischen Antrieb 51 kann das scheibenförmig konfigurierte Steuerungselement 7 um seine Drehachse 63 entweder im ersten Drehsinn 61 oder im zweiten Drehsinn 64 betätigt werden. Der Sockel 67, an dem die den freien Strömungsquerschnitt 2 begrenzende Wandung aufgenommen ist, ist von einer Sockelbohrung 68 durchzogen. In der Sockelbohrung 68 des Sockels 67 ist ein in Figur 10 nicht dargestelltes Verdampferrohr 69 enthalten. Der Sockel 67 befindet sich im oberen Bereich der Dosiereinrichtung 4, die einen Rohrverdampfer 65 umfassen kann, welcher an der dem Sockel 67 abgewandten Seite mit einem Anschluß 66 zur Zufuhr des Dosiermittels versehen ist.

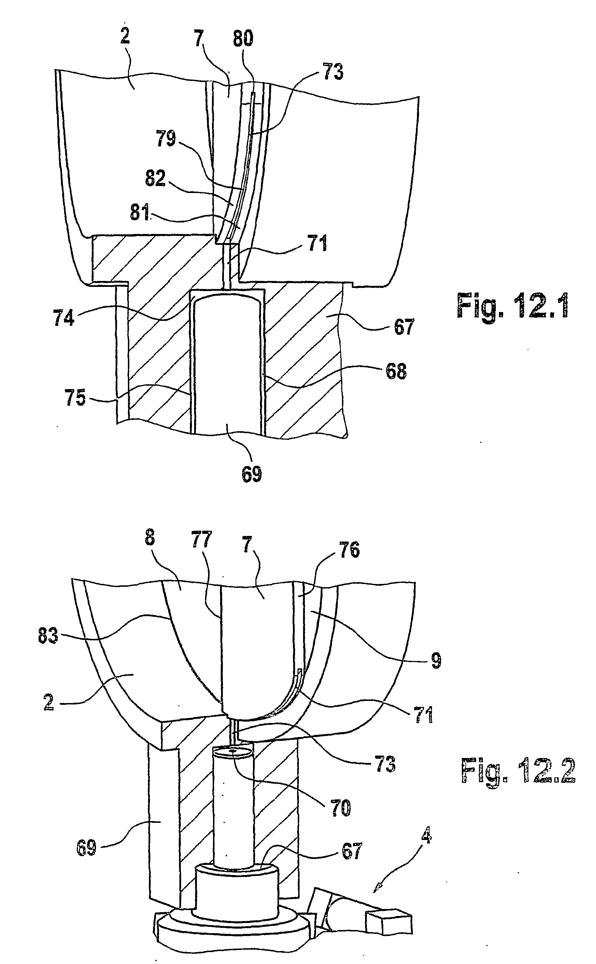

Figur 11 zeigt einen Teilschnitt durch die Ausführungsvariante gemäß der Figuren 9 bzw. 10. Aus dieser Figur geht hervor, dass das in Scheibenform konfigurierte Steuerungselement 7 an seinem Umfangsflächensegment, welches sich zwischen der kurzen Seite 76 und der langen Seite 77 erstreckt, jeweils einen Ringnutabschnitt 72 bzw. 79 umfasst. Der Ringnutabschnitt 72 bzw. 79 wird von einer ersten Ringnutwandung 81 bzw. einer zweiten Ringnutwandung 82 begrenzt (vgl. Darstellung gemäß Figur 12.1).

Mittels der in Figur 8 wiedergegebenen Antriebseinheit 51 kann das in Scheibenform konfigurierte Steuerungselement 7 entweder in der ersten Drehrichtung 61 bzw. in der zweiten Drehrichtung 64 verdreht werden, so dass im freien Strömungsquerschnitt 2 unterschiedliche Strömungsquerschnitte für Teilströme I bzw. II erzeugt werden.

Aus der Darstellung gemäß Figur 11 ist des weiteren entnehmbar, dass der obere Teil eines Rohrverdampfers 65 in der Sockelbohrung 68 des Sockels 67 aufgenommen ist. Mit Bezugszeichen 73 ist ein Kanalabschnitt in der Wandung bezeichnet, die den freien Strömungsquerschnitt 2 begrenzt. Der in Figur 11 dargestellte Dosierkanalabschnitt 73 steht in Verbindung mit den Ringnuten 72 bzw. 79, welche an den Umfangssegmenten des in Scheibenform ausgebildeten Steuerungselements 7 vorgesehen sind.

Den Figuren 12.1 bzw. 12.2 sind jeweils Darstellungen von Einzelheiten der Dosiermittelzuführung zum Steuerungselement 7 zu entnehmen.

Die Darstellung gemäß Figur 12.1 zeigt einen Teilschnitt durch den Sockel 67, in dessen Aufnahmebohrung 68 ein Austrittsrohr 69 des Rohrverdampfers 65 aufgenommen ist. Das Austrittsrohr 69 und die Innenwandung der Sockelbohrung 68 begrenzen einen Ringspalt 75, der in seinem oberen Bereich innerhalb des Sockels 67 in eine Kammer 74 übergeht. Von der Kammer 74 ausgehend erstreckt sich durch den Sockel 67 ein Dosierkanalabschnitt 73. Das der Kammer 74 abgewandte Ende des Dosierkanalabschnitts 73 steht mit den der Umfangsfläche des Steuerungselements 7 ausgebildeten Ringnuten 79 in Verbindung. Das Dosiermittel, welches über den Rohrverdampfer 65 zugeführt wird, wird nach Austritt aus dem Austrittsrohr 69 des Rohrverdampfers 65 über den Dosierkanalabschnitt 73 in die Ringnut 72 oder 79, welche an den Außenumfangssegmenten des in Scheibenform ausgebildeten Steuerungselements 7 eingefräst ist, eingeleitet. Das Dosiermittel strömt entlang der Außenumfangsfläche des in Scheibenform beschaffenen Steuerungselements 7, bis zum Eintritt des Gasstroms 1 in den Teilstrang A oder B, in welchem das Dosiermittel benötigt wird. Zur Verhinderung eines seitlichen Austritts des Dosiermittels aus den Ringnutabschnitten 72 bzw. 79 am Umfang des Steuerungselements 7 ist das in Scheibenform konfigurierte Steuerungselement 7 innerhalb des freien Strömungsquerschnitts 2 des Gehäuses in einer Gehäusenut 83 geführt.

Da das in Scheibensegmentform beschaffene Steuerungselement 7 lediglich um eine parallel zur eintretenden Gasströmung 1 verlaufenden Drehachse 63 bewegt wird, stehen der Dosierkanalabschnitt 73 und die Ringnuten 72 bzw. 79 stets in Verbindung miteinander, so dass das in dem durch die Ringnuten 72, 79 und den Dosierkanalabschnitt 73 des Sockels 67 gebildeten Dosiermittelkanal 71 strömende Dosiermittel nicht an unerwünschten Stellen innerhalb des freien Strömungsquerschnitts 2 austritt.

Vorzugsweise wird das Dosiermittel nach Austritt aus dem Austrittsrohr 69 mit Austrittsöffnung 70 des Rohrverdampfers 65 zu der Seite des Steuerungselements 7 in Scheibenform transportiert, die den minimalen Volumenstrom bestimmt, d.h. zur kurzen Seite 76 des in Scheibenform ausgebildeten Steuerungselements 7.

Figur 12.2 ist entnehmbar, dass das an einer Austrittsöffnung 70 des Austrittsrohres 69 des Rohrverdampfers 65 austretende Dosiermittel in den in der Wandung des freien Strömungsquerschnitts 2 ausgebildeten Dosierkanalabschnitt 73 eintritt und von dort in eine Ringnut an der Umfangsfläche des Steuerungselements 7 einströmt. Von dort strömt das Dosiermittel durch den durch die Ringnut gebildeten Dosiermittelkanal 71 in Richtung auf die kurze Seite 76 des in Scheibenform beschaffenen Steuerungselements 7 und tritt an dieser an den minimalen Teilstrom - im vorliegenden Fall im Abzweig 9 - ein und wird dem diesen reduzierten Strömungsquerschnitt passierenden Teilstrom des eintretenden Gasstroms 1 zugemischt. Mit Bezugszeichen 83 ist an der Begrenzungswandung des freien Strömungsquerschnitts 2 die Gehäusenut bezeichnet, welche eine abdichtende Führung des in Scheibenform beschaffenen Steuerungselements 7 bei dessen Verdrehung um die in Figur 12.2 nicht dargestellte Drehachse 63 ermöglicht.

Mit dieser Ausführungsvariante des der Erfindung zugrundeliegenden Gedankens ist der Vorteil erzielbar,dass das Steuerungselement 7 in einer geringeren Baugröße ausgebildet werden kann, wobei dessen Achse 63 in Axialrichtung des Abgasstrangs und damit des eintretenden Gasstroms 1 liegt. Mit der hier vorgestellten Ausführungsvariante lässt sich der als in Scheibenform beschaffene Steuerungselement 7 verdrehende Antrieb 51 zwischen den Abzweigen A bzw. B integrieren und beansprucht kaum Bauraum. Über die Drehlage der langen bzw. der kurzen Seite 77 bzw. 76 des in Scheibenform beschaffenen Ansteuerungselements 7 kann der minimale Volumenstrom Sowohl für den Abzweig A bzw. für den Abzweig B durch Drehung des in Scheibenform beschaffenen Steuerungselements 7 eingestellt werden. In bestimmten Betriebszuständen wie beispielsweise während des Warmlaufs oder während des Notlaufes der Verbrennungskraftmaschine können durch eine Drehung des Steuerungselementes 7 um 90° beide Abzweige A und B gleichermaßen durchströmt werden.

Mit der beschriebenen Lösung läßt sich mittels eines Steuerelementes 7, welches einen eintretenden Gasstrom 1, beispielsweise einen Abgasstrom einer Verbrennungskraftmaschine, in zwei Teilströme 20 bzw. 21 in einem bestimmten Volumenstromverhältnis V_{Gas} aufteilt, gleichzeitig einem zuzudosierenden Strom eines Mediums 5 zur Abgasnachbehandlung, wie beispielsweise eines Reduktionsmittels (z. B. Kohlenwasserstoffe oder eine Harnstoff-Wasserlösung), ein anderes Verhältnis V_{DOS}, verglichen mit dem Volumenstromverhältnis V_{Gas} der beiden Teilströme 20 bzw. 21 aufprägen. Damit läßt sich in Verbrennungskraftmaschinen zugeordneten Abgasbehandlungssystemen eine zweite Dosiereinrichtung vermeiden.

### Bezugszeichenliste

- 1: eintretender Gasstrom
- 2: Strömungsquerschnitt
- 3: Einspeisestelle
- 4: Dosiereinrichtung
- 5: zuzudosierendes Medium
- 6: Zuleitung
- 7: Steuerelement
- 8: Abzweig B
- 9: Abzweig A
- 10: Achse
- 11 1: Stellposition A
- 12: Stellposition B
- 13: Strömungsquerschnitt Abzweig A
- 14: Strömungsquerschnitt Abzweig B
- 15: Speicherkatalysator B
- 16: Speicherkatalysator A
- 17: Zusammenführung

- 20: austretender Hauptstrom (90%)
- 21: austretender Teilstrom (10%)
- 22.1: erster Flächenabschnitt
- 22.2: zweiter Flächenabschnitt
- 23.1: erste Anlage
- 23.2: zweite Anlage
- 23.3: weitere Anlage
- 24.1: Öffnung
- 24.2: Öffnung
- 25: Einspeisestelle
- 26: Stellbewegung
- 27: erste Stellung
- 28: zweite Stellung
- 29: rechteckförmiger Strömungsquerschnitt
- 30: Trichtereinlauf
- 31: Rohrabschnitt
- 32: weiterer Rohrabschnitt
- 33: Querschnitt
- 34: gewinkelte Anordnung
- 35: Klappenfläche
- 36.1: erste Anlagekante
- 36.2: zweite Anlagekante
- 40: Hohlwelle
- 41: erstes Leitblech
- 42: zweites Leitblech

- 50: Schaltungsvariante ohne Drehrichtungsumkehr
- 51: elektrischer Antrieb
- 52: erster Schalter
- 53: zweiter Schalter
- 54: dritter Schalter
- 55: vierter Schalter
- 56: Schaltungsvariante mit Drehrichtungsumkehr

- 60: Trennwand
- 61: erster Drehsinn
- 62: Antriebswelle
- 63: Drehachse
- 64: zweiter Drehsinn
- 65: Rohrverdampfer
- 66: Anschluß Dosiermittelzufuhr
- 67: Sockel
- 68: Sockelbohrung
- 69: Austrittsrohr Rohrverdampfer
- 70: Austrittsöffnung
- 71: Dosiermittelkanal
- 72: Ringnut
- 73: Dosierkanalabschnitt Sockel
- 74: Kammer
- 75: Ringspalt
- 76: kurze Seite
- 77: lange Seite
- 78: Außenumfang Steuerungselement
- 79: Ringnut
- 80: Nutauslauf
- 81: erste Ringnutwandung
- 82: zweite Ringnutwandung
- 83: Gehäusenut

## Patentansprüche

1. Einrichtung zur Aufteilung eines eintretenden Gasstroms (1), der den freien Strömungsquerschnitt (2, 2a) eines Leitungssystems durchströmt, in zwei Teilströme (20, 21), von denen jeder einen Abzweig (8, 9) des Leitungssystems durchströmt mit einem Steuerelement (7), welches um eine Achse (10) eine Stellbewegung (26) zwischen einer ersten Stellung (27) und einer zweiten Stellung (28) ausführt der eintretende Gasstrom (1) mittels des verstellbaren Steuerelementes (7) stufenlos in einem Volumenstromverhältnis V_{Gas} aufgeteilt wird und das Steuerelement (7) gleichzeitig ein zuzudosierendes Medium (5), dessen Einspeisestelle (3, 25) dem Steuerelement (7) zugeordnet ist, in einem anderen Verhältnis V_{DOS} auf die Teilströme (20, 21) aufteilt, **dadurch gekennzeichnet, dass** das an einer Verzweigungsstelle des eintretenden Gasstroms (1) angeordnete Steuerelement (7) einen Kanal (24.1, 24.2, 31, 32, 40, 71, 72, 73, 79) aufweist, durch den das zuzudosierende Medium (5) geleitet wird.

2. Einrichtung gemäß Anspruch 1, **dadurch gekennzeichnet, daß** das Volumenstromverhältnis V_{Gas} der abströmenden Teilströme (20, 21) durch eine entsprechende Zwischenstellung des Steuerelementes (7) zwischen einer ersten Stellung (27) und einer zweiten Stellung (28) variierbar ist.

3. Einrichtung gemäß Anspruch 1, **dadurch gekennzeichnet, daß** die Einspeisestelle (3, 25) des zuzudosierenden Mediums (5) im Bodenbereich oder im Deckelbereich des freien Strömungsquerschnitts (2, 29) aufgenommen ist.

4. Einrichtung gemäß Anspruch 1, **dadurch gekennzeichnet, daß** die Einspeisestelle (3, 25) fingerförmig in den freien Strömungsquerschnitt (2, 29) hineinragt.

5. Einrichtung gemäß Anspruch 1, **dadurch gekennzeichnet, daß** das Steuerelement (7) symmetrisch zur Achse (10) ausgebildete flügelförmige Flächenabschnitte (22.1, 22.2) umfaßt.

6. Einrichtung gemäß Anspruch 5, **dadurch gekennzeichnet, daß** die flügelförmigen Flächenabschnitte (22.1, 22.2) jeweils fensterförmige Öffnungen (24.1, 24.2) umfassen.

7. Einrichtung gemäß Anspruch 5, **dadurch gekennzeichnet, daß** die flügelförmigen Flächenabschnitte (22.1, 22.2) in erster Stellung (27) oder in zweiter Stellung (28) an Anlagekanten (23.1, 23.2, 23.3) des freien Strömungsquerschnittes (2) anstehen.

8. Einrichtung gemäß Anspruch 1, **dadurch gekennzeichnet, daß** das Steuerelement (7) als einseitig angelenktes Klappenelement ausgebildet ist, dessen Klappenfläche (35) an einer Wandung des freien Strömungsquerschnittes (29) aufgenommen ist.

9. Einrichtung gemäß Anspruch 8, **dadurch gekennzeichnet, daß** an beiden Seiten der Klappenfläche (35) Rohrabschnitte (31, 32) aufgenommen sind, die in der Klappenfläche (35) versetzt zueinander enden.

10. Einrichtung gemäß Anspruch 9, **dadurch gekennzeichnet, daß** den Rohrabschnitten (31, 32) an den der Klappenfläche (35) gegenüberliegenden Enden trichterförmige Einläufe (30) zugeordnet sind.

11. Einrichtung gemäß Anspruch 9, **dadurch gekennzeichnet, daß** die Rohrabschnitte (31, 32) an der Klappenfläche (35) gewinkelt zueinander aufgenommen sind.

12. Einrichtung gemäß Anspruch 9, **dadurch gekennzeichnet, daß** die Einspeisestelle (3, 25) des zuzudosierenden Mediums (5) vor dem Rohrabschnitt (31) des Steuerelementes (7) liegt, der dem freien Strömungsquerschnitt (2) des eintretenden Gasstroms (1) zugeordnet ist.

13. Einrichtung gemäß Anspruch 1, **dadurch gekennzeichnet, dass** das Steuerelement (7) an einer Hohlwelle (40) ausgebildet ist, in deren Innerem die Einspeisestelle (3, 25) für das zuzudosierende Medium (5) aufgenommen ist.

14. Einrichtung gemäß Anspruch 13, **dadurch gekennzeichnet**, das die Wandung der Hohlwelle (40) von fensterförmigen Öffnungen (24.1, 24.2) durchbrochen ist und an der Hohlwelle (40) Flächenabschnitte (22.1, 22.2) aufgenommen sind.

15. Einrichtung gemäß der Ansprüche 5 oder 14, **dadurch gekennzeichnet, dass** die Flächenabschnitte (22.1, 22.2) in gewinkelter Anordnung zueinander aufgenommen sind.

16. Einrichtung gemäß Anspruch 1, **dadurch gekennzeichnet, dass** bei Ausfall einer Antriebseinheit (51) des verstellbaren Steuerelementes (7) dieses automatisch in eine Mittelstellung zwischen erster Stellung und zweiter Stellung (27, 28) fährt, so dass die dem Steuerelement (7) nachgeordneten Abzweige (8, 9) gleichmäßig vom eintretenden Gasstrom (1) beaufschlagt sind.

17. Einrichtung gemäß Anspruch 1, **dadurch gekennzeichnet, dass** das Steuerungselement (7) scheibensegmentförmig ausgebildet ist und im freien Strömungsquerschnitt (2) um eine Drehachse (63), welche parallel zur Strömung liegt, verdrehbar ist.

18. Einrichtung gemäß Anspruch 17, **dadurch gekennzeichnet, dass** das scheibenförmige Steuerungselement (7) zueinander parallel verlaufende Kantenabschnitte (76, 77) umfasst, die Durchschnittsquerschnitte für Teilströme des eintretenden Gasstroms (1) begrenzen.

19. Einrichtung gemäß Anspruch 18, **dadurch gekennzeichnet, dass** die am scheibensegmentförmigen Steuerungselement (7) einander gegenüberliegende Kanten (76, 77) von unterschiedlicher Kantenlänge sind.

20. Einrichtung gemäß Anspruch 1, **dadurch gekennzeichnet, dass** das Steuerungselement (7) langlochartig konfigurierte Öffnungen bzw. Teilausbrüche in seiner Fläche aufweist.

21. Einrichtung gemäß Anspruch 17, **dadurch gekennzeichnet, dass** am Außenumfang des scheibensegmentförmigen Steuerungselements (7) nutförmige Dosiermittelkanäle (72, 79) ausgebildet sind.

22. Einrichtung gemäß Anspruch 21, **dadurch gekennzeichnet, dass** das scheibensegmentförmige Steuerungselement (7) im freien Strömungsquerschnitt (2) in einer Nut (83) geführt ist, die an der Begrenzungswandung des freien Strömungsquerschnitts (2) ausgebildet ist.

23. Einrichtung gemäß Anspruch 21, **dadurch gekennzeichnet, dass** die Dosiermittelkanäle (72, 75) des Steuerungselements (7) in Scheibenform mit einem in der Begrenzungswand des freien Strömungsquerschnitts (2) ausgebildeten Dosierkanalabschnitt (73) verbunden sind.

24. Einrichtung gemäß Anspruch 23, **dadurch gekennzeichnet, dass** dem Steuerungselement (7) eine einen Rohrverdampfer (65, 69) enthaltende Dosiereinrichtung (4) zugeordnet ist.

25. Einrichtung gemäß Anspruch 17, **dadurch gekennzeichnet, dass** der das scheibensegmentförmige Steuerungselement (7) betätigende Antrieb (51) über eine Antriebswelle (62) mit der Drehachse (63) des Steuerungselements (7) gekoppelt ist.

26. Einrichtung gemäß Anspruch 25, **dadurch gekennzeichnet, dass** das Steuerungselement in Scheibensegmentform (7) mittels eines elektrischen Antriebs (51) oder eines pneumatischen Antriebes in eine erste Drehrichtung (61) verdrehbar ist.

27. Einrichtung gemäß Anspruch 25, **dadurch gekennzeichnet, dass** das Steuerungselement in Scheibensegmentform (7) mittels eines elektrischen Antriebs (51) oder eines pneumatischen Antriebes in eine zweite Drehrichtung (64) verdrehbar ist.

28. Einrichtung gemäß Anspruch 5, **dadurch gekennzeichnet, dass** das Steuerungselement (7) in Klappenform mittels des elektrischen Antriebs (51) sowohl in einer ersten Drehrichtung (61) als auch in die zweite Drehrichtung (64) betätigbar ist.

29. Verwendung der Einrichtung gemäß einem oder mehrerer der Ansprüche 1 bis 28 in einer Anordnung zur Abgasnachbehandlung von Verbrennungskraftmaschinen, in deren Zweigen (8, 9) regenerierbare Katalysatoren oder Speicherkatalysatoren (15, 16) aufgenommen sind.

30. Verwendung der Einrichtung gemäß einem oder mehrerer der Ansprüche 1 bis 28 in einer Anordnung zur Abgasnachbehandlung von Verbrennungskraftmaschinen, in deren Abzweige (8, 9) ein Partikelfilter mit einem vorgeschalteten Oxidationskatalysator aufgenommen ist.

## Claims

1. Device for dividing an incoming gas stream (1), which flows through the free cross section of flow (2, 29) of a pipe system, into two part-streams (20, 21), each of which flows through one branch (8, 9) of the pipe system, having a control element (7), which executes a control movement (26) about a pin (10) between a first position (27) and a second position (28), the incoming gas stream (1) is divided in a continuously variable manner in a volumetric flow ratio V_{Gas} by means of the adjustable control element (7), and the control element (7) simultaneously divides a medium (5) which is to be metered in - with the point (3, 25) at which it is fed in assigned to the control element (7) - between the part-streams (20, 21) in a different ratio V_{DOS}, **characterized in that** the control element (7), which is arranged at a branching point of the incoming gas stream (1), has a passage (24.1, 24.2, 31, 32, 40, 71, 72, 73, 79) through which the medium (5) which is to be metered in is passed.

2. Device according to Claim 1, **characterized in that** the volumetric flow ratio V_{Gas} of the part-streams (20, 21) flowing out can be varied by a corresponding intermediate position of the control element (7) between a first position (27) and a second position (28).

3. Device according to Claim 1, **characterized in that** the point (3, 25) at which the medium (5) to be metered in is fed in is accommodated in the base region or the cover region of the free cross section of flow (2, 29).

4. Device according to Claim 1, **characterized in that** the feed-in point (3, 25) projects in finger form into the free cross section of flow (2, 29).

5. Device according to Claim 1, **characterized in that** the control element (7) comprises vane-like surface sections (22.1, 22.2) formed symmetrically with respect to the pin (10).

6. Device according to Claim 5, **characterized in that** the vane-like surface sections (22.1, 22.2) each comprise window-like openings (24.1, 24.2).

7. Device according to Claim 5, **characterized in that** the vane-like surface sections (22.1, 22.2), in the first position (27) or in the second position (28), bear against bearing edges (23.1, 23.2, 23.3) of the free cross section of flow (2).

8. Device according to Claim 1, **characterized in that** the control element (7) is designed as a flap element which is articulatively mounted on one side and the flap surface (35) of which is held against a wall of the free cross section of flow (29).

9. Device according to Claim 8, **characterized in that** tube sections (31, 32), which end offset with respect to one another in the flap surface (35), are held on both sides of the flap surface (35).

10. Device according to Claim 9, **characterized in that** funnel-shaped inlets (30) are assigned to the tube sections (31, 32) at the opposite ends from the flap surface (35).

11. Device according to Claim 9, **characterized in that** the tube sections (31, 32) are held at an angle with respect to one another at the flap surface (35).

12. Device according to Claim 9, **characterized in that** the point (3, 25) at which the medium (5) to be metered in is fed in lies upstream of the tube section (31) of the control element (7) which is assigned to the free cross section of flow (2) of the incoming gas stream (1).

13. Device according to Claim 1, **characterized in that** the control element (7) is formed at a hollow shaft (40) with the point (3, 25) at which the medium (5) to be metered in is fed in accommodated in its interior.

14. Device according to Claim 13, **characterized in that** the wall of the hollow shaft (40) is perforated by window-like openings (24.1, 24.2), and surface sections (22.1, 22.2) are held against the hollow shaft (40).

15. Device according to Claim 5 or 14, **characterized in that** the surface sections (22.1, 22.2) are held in an angled arrangement with respect to one another.

16. Device according to Claim 1, **characterized in that** in the event of a drive unit (51) of the adjustable control element (7) failing, this control element automatically moves into a middle position between the first and second positions (27, 28), so that the incoming gas stream (1) is split uniformly between the branches (8, 9) arranged downstream of the control element (7).

17. Device according to Claim 1, **characterized in that** the control element (7) is designed in disc segment form and can be rotated in the free cross section of flow (2) about a rotation pin (63) which is parallel to the flow.

18. Device according to Claim 17, **characterized in that** the disc-like control element (7) comprises edge sections (76, 77) which run parallel to one another and delimit average cross sections for part-streams of the incoming gas stream (1).

19. Device according to Claim 18, **characterized in that** the edges (76, 77) which lie opposite one another on the control element (7) in the form of a disc segment have different edge lengths.

20. Device according to Claim 1, **characterized in that** the control element (7) has partial apertures or openings of slot-like configuration in its surface.

21. Device according to Claim 17, **characterized in that** groove-like metering-agent passages (72, 79) are formed at the outer circumference of the control element (7) which is in the form of a disc segment.

22. Device according to Claim 21, **characterized in that** the control element (7) which is in the form of a disc segment is guided in a groove (83) in the free cross section of flow (2), which groove is formed at the boundary wall of the free cross section of flow (2).

23. Device according to Claim 21, **characterized in that** the metering-agent passages (72, 75) of the control element (7) in disc form are connected to a metering-passage section (73) formed in the boundary wall of the free cross section of flow (2).

24. Device according to Claim 23, **characterized in that** the control element (7) is assigned a metering device (4) containing a tube evaporator (65, 69).

25. Device according to Claim 17, **characterized in that** the drive (51) which actuates the control element (7) in disc segment form is coupled via a drive shaft (62) to the rotation pin (63) of the control element (7).

26. Device according to Claim 25, **characterized in that** the control element in disc segment form (7) can be rotated in a first direction of rotation (61) by means of an electrical drive (51) or a pneumatic drive.

27. Device according to Claim 25, **characterized in that** the control element in disc segment form (7) can be rotated in a second direction of rotation (64) by means of an electrical drive (51) or a pneumatic drive.

28. Device according to Claim 5, **characterized in that** the control element (7) in flap form can be actuated both in a first direction of rotation (61) and in the second direction of rotation (64) by means of the electrical drive (51).

29. Use of the device according to one or more of Claims 1 to 28 in an arrangement for the aftertreatment of exhaust gases from internal combustion engines, in the branches (8, 9) of which regeneratable catalytic converters or storage catalytic converters (15, 16) are accommodated.

30. Use of the device according to one or more of Claims 1 to 28 in an arrangement for the aftertreatment of the exhaust gases from internal combustion engines, in the branches (8, 9) of which a particulate filter with an upstream oxidation catalytic converter is accommodated .

## Revendications

1. Installation pour la répartition d'un flux gazeux entrant (1) passant à travers la section transversale d'écoulement libre (2, 29) d'une installation de conduites, en deux courants partiels (20, 21), dont chacun passe à travers un embranchement (8, 9) du Installation de conduites avec un élément de commande (7) qui effectue autour d'un axe (10) un mouvement de réglage (26) entre une première position (27) et une seconde position (28), le flux gazeux entrant (1) étant divisé en continu au moyen de l'élément de commande réglable (7) dans un rapport de débit volumétrique V_{Gaz} et l'élément de commande (7) répartissant simultanément en courants partiels (20, 21) dans un autre rapport V_{Dos} un milieu à doser (5) dont le point d'alimentation (3, 25) est associé à l'élément de commande réglable (7),
**caractérisée en ce que**
l'élément de commande (7) disposé à un point d'embranchement du flux gazeux entrant (1) comprend un canal (24.1, 24.2, 31, 32, 40, 71, 72, 73, 79), qui conduit le milieu à doser.

2. Installation selon la revendication 1,
**caractériséee en ce que**
le rapport de débit volumétrique V_{Gas} des courants partiels dérivant (20, 21) est variable par une position intermédiaire correspondante de l'élément de commande (7) entre une première position (27) et une seconde position (28).

3. Installation selon la revendication 1,
**caractériséee en ce que**
le point d'alimentation (3, 25) du milieu à doser (5) est reçu dans la zone de fond ou dans la zone de couvercle de la section transversale d'écoulement libre (2, 29).

4. Installation selon la revendication 1,
**caractériséee en ce que**
le point d'alimentation (3, 25) s'engage sous la forme d'un doigt dans la section transversale d'écoulement libre (2, 29).

5. Installation selon la revendication 1,
**caractériséee en ce que**
l'élément de commande (7) comprend des sections de surface en forme d'aile (22.1, 22.2) réalisées de façon symétrique à l'axe (10).

6. Installation selon la revendication 5,
**caractériséee en ce que**
les sections de surface en forme d'aile (22.1, 22.2) comprennent respectivement des ouvertures en forme de fenêtre (24.1, 24.2).

7. Installation selon la revendication 5,
**caractériséee en ce que**
les sections de surface en forme d'aile (22.1, 22.2) affleurent dans une première position (27) ou dans une seconde position (28) sur des arêtes d'appui Installation (23.1, 23.2, 23.3) de la section transversale d'écoulement libre (2).

8. Installation selon la revendication 1,
**caractériséee en ce que**
l'élément de commande (7) est réalisé en tant qu'élément à clapet articulé unilatéralement dont la surface de clapet (35) est reçue dans une cloison de la section transversale d'écoulement libre (29).

9. Installation selon la revendication 8,
**caractériséee en ce que**
des tronçons de tube (31, 32) sont reçus des deux côtés de la surface de clapet (35), et aboutissent dans la surface de clapet (35) de manière à être décalés les uns par rapport aux autres.

10. Installation selon la revendication 9,
**caractérisée en ce que**
des entrées en forme d'entonnoir (30) sont associées aux tronçons de tube (31, 32) aux extrémités opposées à la surface de clapet (35).

11. Installation selon la revendication 9,
**caractérisée en ce que**
les tronçons de tube (31, 32) sont reçus sur la surface de clapet (35) de façon à être en angle les uns par rapport aux autres.

12. Installation selon la revendication 9,
**caractérisée en ce que**
le point d'alimentation (3, 25) du milieu à doser (5) se trouve avant le tronçon de tube (31) de l'élément de commande (7) qui est associé à la section transversale d'écoulement libre (2) du flux gazeux entrant (1).

13. Installation selon la revendication 1,
**caractérisée en ce que**
l'élément de commande (7) est réalisé sur un arbre creux (40), à l'intérieur duquel est reçu le point d'alimentation (3, 25) pour le milieu à doser (5).

14. Installation selon la revendication 13,
**caractérisée en ce que**
la cloison de l'arbre creux (40) est percée d'ouvertures en forme de fenêtre (24.1, 24.2) et les sections de surface (22.1, 22.2) sont reçues sur l'arbre creux (40).

15. Installation selon la revendication 5 ou 14,
**caractérisée en ce que**
les sections de surface (22.1, 22.2) sont reçues en étant dans une disposition angulaire les unes par rapport aux autres.

16. Installation selon la revendication 1,
**caractérisée en ce que**
en cas de défaillance d'une unité d'entraînement (51) de l'élément de commande réglable (7) celui-ci entre automatiquement dans une position intermédiaire entre une première position et une seconde position (27, 28), de sorte que les embranchements (8,9) placés en aval de l'élément de commande (7) soient alimentés de manière égale par le flux gazeux (1) entrant.

17. Installation selon la revendication 1,
**caractérisée en ce que**
l'élément de commande (7) est réalisé en forme de segment circulaire et peut être tourné dans la section transversale d'écoulement libre (2) autour d'un axe de rotation (63) parallèle à l'écoulement.

18. Installation selon la revendication 17,
**caractérisée en ce que**
l'élément de commande (7) en forme de disque comprend des sections de bord (76, 77) s'étendant parallèlement les unes par rapport aux autres, qui limitent les sections transversales moyennes pour les courants partiels du flux gazeux entrant (1).

19. Installation selon la revendication 18,
**caractérisée en ce que**
les bords (76, 77) opposés l'un à l'autre sur l'élément de commande en forme de segment circulaire (7), sont d'une longueur de bord différente.

20. Installation selon la revendication 1,
**caractérisée en ce que**
l'élément de commande (7) comprend des ouvertures configurées du type oblongues et/ou des creux partiels dans sa surface.

21. Installation selon la revendication 17,
**caractérisée en ce que**
des canaux de moyens de dosage (72, 79) en forme de rainure sont réalisés à la périphérie extérieure de l'élément de commande en forme de segment circulaire (7).

22. Installation selon la revendication 21,
**caractérisée en ce que**
l'élément de commande en forme de segment circulaire (7) est guidé dans la section transversale d'écoulement libre (2) dans une rainure (83), qui est réalisée sur la cloison de délimitation de la section transversale d'écoulement libre (2).

23. Installation selon la revendication 21,
**caractérisée en ce que**
les canaux de moyens de dosage (72, 75) de l'élément de commande (7) sont reliés à une section de canal de dosage (73) réalisée dans la cloison de délimitation de la section transversale d'écoulement libre (2).

24. Installation selon la revendication 23,
**caractérisée en ce qu'**
un dispositif de dosage (4) contenant un évaporateur tubulaire (65, 69) est associé à l'élément de commande (7).

25. Installation selon la revendication 17,
**caractérisée en ce que**
la commande (51) actionnant l'élément de commande en forme de segment circulaire (7) est couplée par l'intermédiaire d'un arbre d'entraînement (62) à l'axe de rotation (63) de l'élément de commande (7).

26. Installation selon la revendication 25,
**caractérisée en ce que**
l'élément de commande en forme de segment circulaire (7) peut être tourné dans un premier sens de rotation (61) au moyen d'une commande électrique (51) ou pneumatique.

27. Installation selon la revendication 25,
**caractérisée en ce que**
l'élément de commande en forme de segment circulaire (7) peut être tourné dans un second sens de rotation (64) au moyen d'une commande électrique (51) ou pneumatique.

28. Installation selon la revendication 5,
**caractérisée en ce que**
l'élément de commande (7) sous forme de clapet peut être actionné au moyen de la commande électrique (51) aussi bien dans un premier sens de rotation (61) que dans un second sens de rotation (64).

29. Utilisation de l'installation selon une ou plusieurs des revendications 1 à 28 dans un dispositif pour un traitement ultérieur des gaz d'échappement des moteurs à combustion interne, dont les embranchements (8, 9) logent des catalyseurs ou des catalyseurs de stockage pouvant être régénérés (15, 16).

30. Utilisation de l'installation selon une ou plusieurs des revendications 1 à 28, dans un dispositif pour un traitement ultérieur des gaz d'échappement des moteurs à combustion interne, dont les embranchements (8, 9) logent un filtre à particules avec un convertisseur catalytique à oxydation placé en amont.
